Europäisches Patentamt

European Patent Office

Office européen des brevets

(11) Publication number: **0 519 619 A2**

# EUROPEAN PATENT APPLICATION

(21) Application number: **92305066.0**

(22) Date of filing: **02.06.92**

(51) Int. Cl.⁵: **B62B 7/14**

(30) Priority: **20.06.91 GB 9113321**

(43) Date of publication of application:
**23.12.92 Bulletin 92/52**

(84) Designated Contracting States:
**DE FR GB IT**

(71) Applicant: **BRITAX-TEUTONIA Kinderwagenfabrik GmbH Postfach 1454 W-4901 Hiddenhausen(DE)**

(72) Inventor: **Brechtmann, Barbara Koloman-Strasse 32 W-7070 Schwabisch Gmund(DE)**
Inventor: **Behrendt, Kathrin Rutsch 1 W-2000 Hamburg 55(DE)**

(74) Representative: **Hollinghurst, Antony B.S.G. International plc Patent Department Castle Trading Estate East Street Portchester, Hampshire PO16 9SD(GB)**

(54) **Child transporter.**

(57) A child transporter comprises a chassis (10-70), a body frame (72-118) detachable from the chassis (10-70) and a fabric cover detachable from the body frame (72-118). The body frame (72-118) comprises a plurality of pivotally interconnected frame members (72-78; 96; 108-112) and means (86) for securing the frame members (72-78; 96; 108-112) in a plurality of alternative orientations relative to each other.

Fig.2.

EP 0 519 619 A2

This invention relates to a child transporter of the type comprising a chassis, a body frame detachable from the chassis and a fabric cover detachable from the body frame. A child transporter of this type is disclosed in GB-A-1561564.

According to the invention in a child transporter of the type described above, the body frame comprises a plurality of pivotally interconnected frame members and means for securing the frame members in a plurality of alternative orientations relative to each other.

An embodiment of the invention will now be described, by way of example, with reference to the accompanying drawings, in which:

Figure 1 is a perspective view of a chassis for a combined pushchair/perambulator in accordance with the invention;

Figure 2 is a perspective view of a body frame for use with the chassis shown in Figure 1;

Figure 3 is a side view of a component of the body frame shown in Figure 2;

Figure 4 is a perspective view of a body base incorporating the body frame shown in Figure 2;

Figure 5 is a perspective view showing a pram body fitted to the body base shown in Figure 4 which, in turn, is fitted to the chassis shown in Figure 1;

Figure 6 is a side view of the chassis shown in Figure 1 in a half-folded position;

Figure 7 is a side view of the pram shown in Figure 5 in the fully-folded position;

Figure 8 is a plan view of a baby carrier which also serves as a mattress for the pram shown in Figures 1 to 6;

Figure 9 is a bottom plan view of the baby carrier shown in Figure 8;

Figure 10 is a plan view, similar to Figure 8, showing a baby in position in the baby carrier;

Figure 11 is a perspective view showing the baby carrier of Figures 8 and 9 carried by an adult; and

Figure 12 is a side perspective view, similar to Figure 5, with the pram body replaced by a pushchair body formed using the baby carrier shown in Figures 8 to 11.

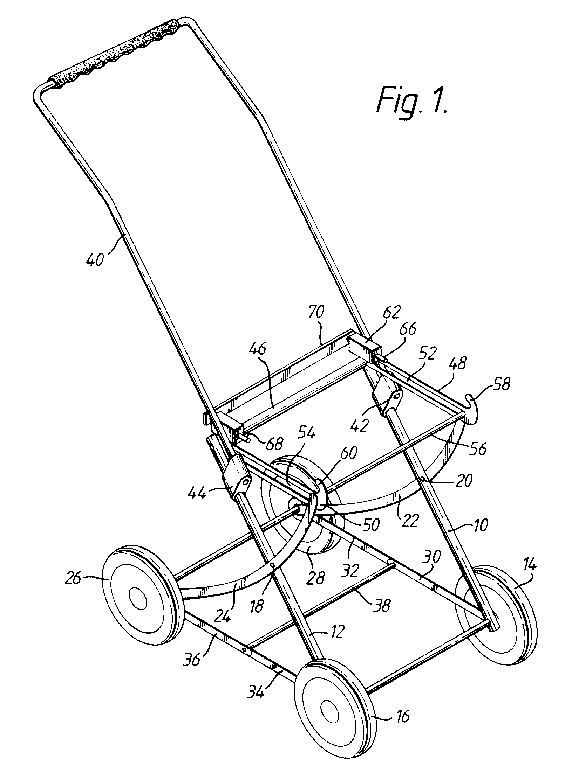

Referring to Figure 1, a chassis for a pushchair comprises a pair of straight legs 10 and 12 which support respective front wheels 14 and 16 and which are pivotally connected at intermediate points along their length by pivot pins 18 and 20 to respective curved legs 22 and 24 which support rear wheels 26 and 28. The bottom ends of the legs 10 and 22 are interconnected by links 30 and 32 and bottom ends of the legs 12 and 24 are interconnected by similar links 34 and 36. A pivot rod 38 connects the link 30 to the link 32 and the link 34 to the link 36. Upward displacement of the pivot rod 38 allows the frame to be folded, as will be described hereinafter.

A U-shaped handle 40 has the ends of its side limbs received in respective slide guides 42 and 44 mounted near the upper ends of the straight legs 10 and 12 respectively.

The upper ends of the straight legs 10 and 12 are interconnected by a transverse member 46 on which a pair of body support members 48 and 50 are pivotally mounted. The body support members 48 and 50 have respective elongate slots 52 and 54 extending along most of their length. The upper ends of the curved legs 22 and 24 are interconnected by a transverse member 56 which projects through the slots 52 and 54 and, when the chassis is in its unfolded position for normal use, abut against the front ends of these slots.

The front ends of the body support members 48 and 50 carry respective rearwardly facing hook formations 58 and 60. At their rear ends, the body support members 48 and 50 have spring units 62 and 64 housing respective plungers 66 and 68 which are aligned with, and spring-biassed towards, the hook formations 58 and 60. The rear ends of the plungers 66 and 68 project from the back of the units 62 and 64 and are interconnected by a cross-bar 70 by means of which a user can pull them back simultaneously with one hand.

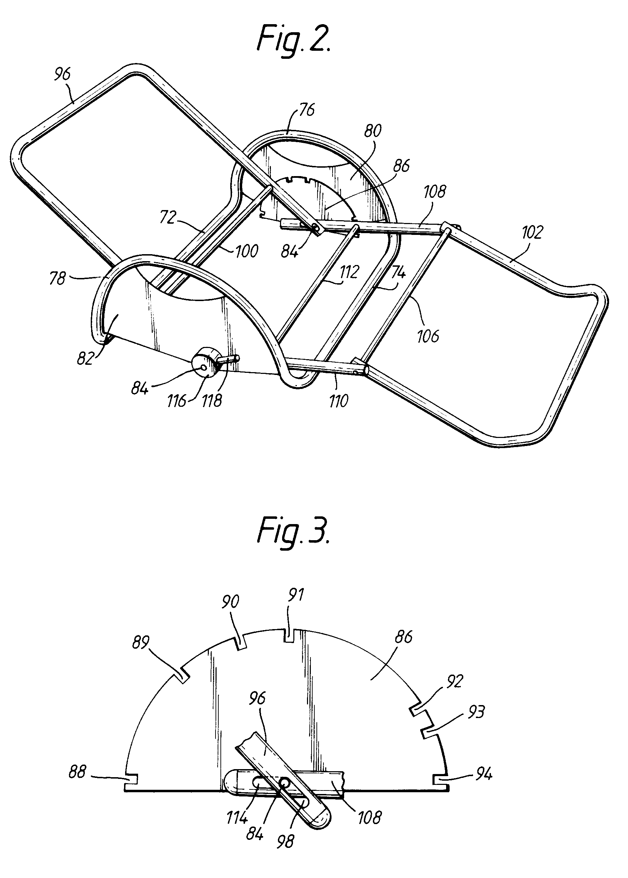

Figure 2 illustrates a body frame assembly in accordance with the invention for use with the chassis shown in Figure 1. The body frame assembly has a static frame comprising two straight transverse members 72 and 74, the ends of which are inter-connected by respective semi-circular members 76 and 78. The mutually parallel transverse members 72 and 74 are spaced apart by a distance such that one of them can engage with the hook formations 58 and 60 while the other engages under the plungers 64 and 66 on the body support members 48 and 50 of the chassis. The body support assembly can be lifted clear of the chassis when the plungers 66 and 68 are withdrawn by pulling on the cross-bar 70.

The lower parts of the regions bounded by the semi-circular members 76 and 78 are filled by respective panels 80 and 82. Each of the panels 80 and 82 includes a journal for a respective pivot pin 84. A respective semi-circular index plate 86 (only one of which is visible in the drawings) is mounted on the inner face of each of the panels 80 and 82. As can be seen from Figure 3, each index plate 86 has seven notches 88-94 in its periphery. The two index plates 86 are mirror images of each other so that each notch 88-94 of the index plate on the left hand side is aligned with the corresponding notch in the index plate 86 on the right hand side of the body frame assembly.

The body frame assembly also comprises a first pivoting sub-frame having a U-shaped member 96 with slots 98 in the ends of each of its limbs engaging on respective pivot pins 84. A transverse member 100 interconnects the limbs of the U-shaped member 96 and each limb carries an outwardly projecting stud (not shown) which is a distance from the corresponding slot 98 so as to engage in one of the notches 88-94 in the index plate 86 when the pin 84 is at the end of the slot 98 shown in Figure 3, and to be clear of the periphery of the index plate 86, and therefore free to pivot about the pins 84, when the latter are at the other end of their respective slots 98.

The frame assembly also has a second pivoting frame assembly which is in two parts. The outer part is an auxiliary sub-frame consisting of a U-shaped member 102, the central portion of which is bent upwardly as illustrated. The ends of the limbs of the U-shaped member 102 are coupled by a pivot rod 106 to respective straight bars 108 and 110. The bars 108 and 110 are interconnected by a transverse member 112 so as to form a second pivoting sub-frame in conjunction with the pivot rod 106. Manually releasable clamping means (not shown) are provided for securing the U-shaped member 102 at a selected angle to the bars 108 and 110.

The ends of the bars 108 and 110 opposite to the pivot rod 106 have respective slots 114 (Figure 3) which are received on the pivot pins 84. The bars 108 and 110 also have studs (not shown) on their outer sides positioned to be engageable in the notches 88-94 on the index plate 86 in a similar manner to the corresponding studs on the U-shaped member 96.

On the outer side of each of the panels 82 and 84, each pivot pin 84 carries a knob 116 with a radially projecting spigot 118.

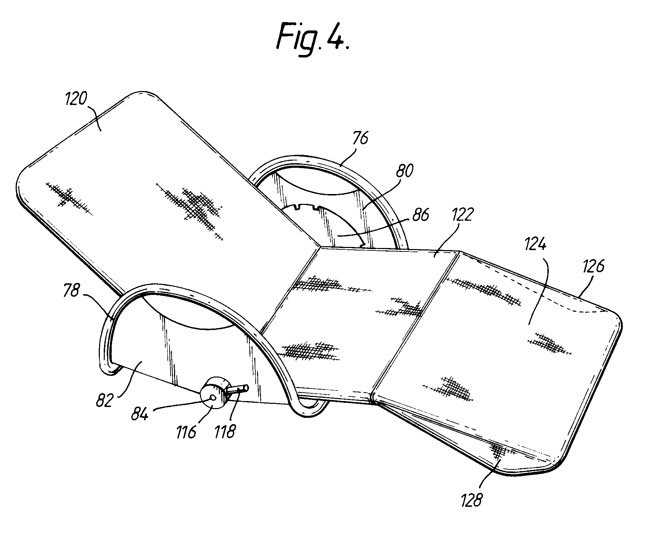

Figure 4 shows a body base formed from the body frame shown in Figure 2. The two pivoting frames of the body frame assembly are enclosed in a fabric cover having a first flat rigid panel 120 resting on the U-shaped member 96, a second flat rigid panel 122 resting on the straight bars 108 and 110 and a third rigid panel 124 resting on the U-shaped member 102. The panel 124 is shaped to conform to the upwardly bent part of the U-shaped member 102. Triangular flexible fabric panels 126 and 128 are formed on each side of the panel 124.

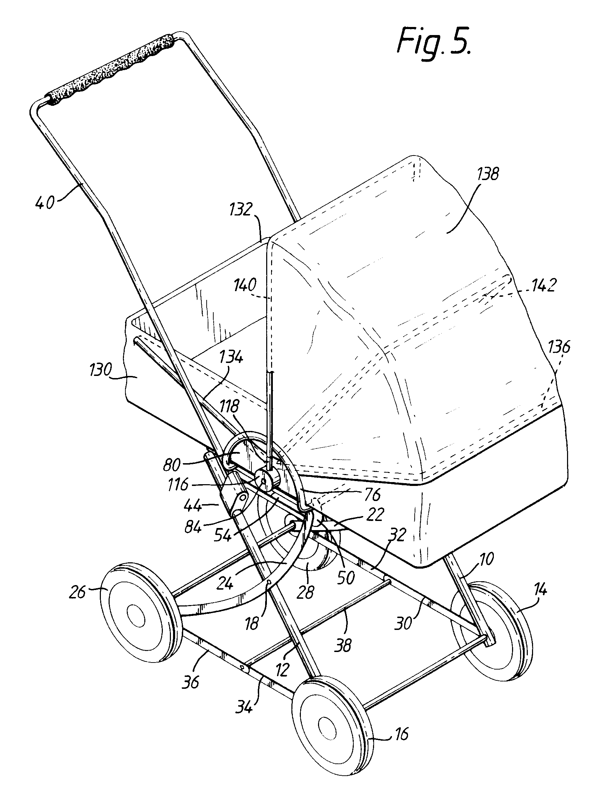

Referring to Figure 5, when the body frame is to serve as the frame of a pram body, the studs on the U-shaped member 96 are positioned to engage in the notches 88 and those on the members 108 and 110 to engage in the notches 94. The body frame is positioned on the chassis with the U-shaped member 102 closest to the handle 40. The U-shaped member 102 is clamped level with the bars 108 and 110 so that the panels 120, 122 and 124 form a rectangular base to serve as the bottom of the pram. The pram comprises a fabric body 130 with a rigid frame 132 extending round its periphery and supported by a pair of U-shaped struts 134 and 136 which have open-ended slots on their free ends to engage on the two pins 84. The body 130 has a hood 138 with a U-shaped front frame member 140 mounted on the spigots 118, and a secondary U-shaped frame member 142 similar to the frame members 134 and 136.

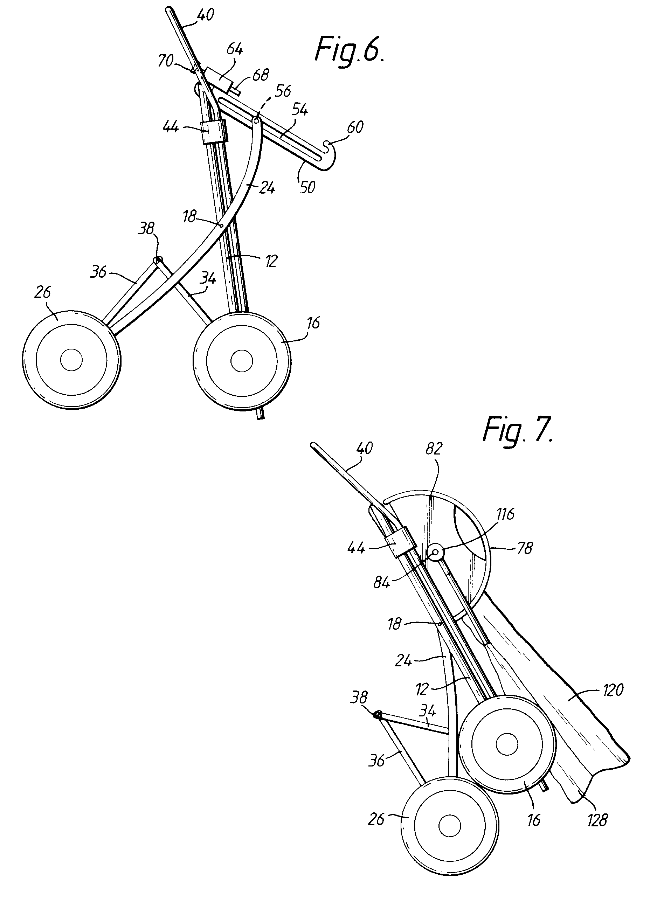

By pulling on the cross-bar 70 (Figure 1), the plungers 66 and 68 may be disengaged from the transverse member 72, allowing the complete pram body to be removed from the chassis. When resting on a flat surface, the pram body is supported on the transverse members 72 and 74 of the body frame assembly. The chassis may then be folded as illustrated in Figure 6. The transverse member 56 at the top of the legs 22 and 24 slides along the slots 52 and 54 as the pivot rod 38 is displaced upwardly allowing the front wheels 14 and 16 to move towards the rear wheels 26 and 28.

If it is desired to fold the chassis with the body in place, the studs on the U-shaped member 96 are disengaged from the slots 88 in the index plates 86. The U-shaped member 96 is then pivoted about the pivot pins 84 and the aforesaid studs moved into engagement with the slots 93 in the index plates 86. The body 120 and hood 128 are thereby folded together, as illustrated in Figure 7.

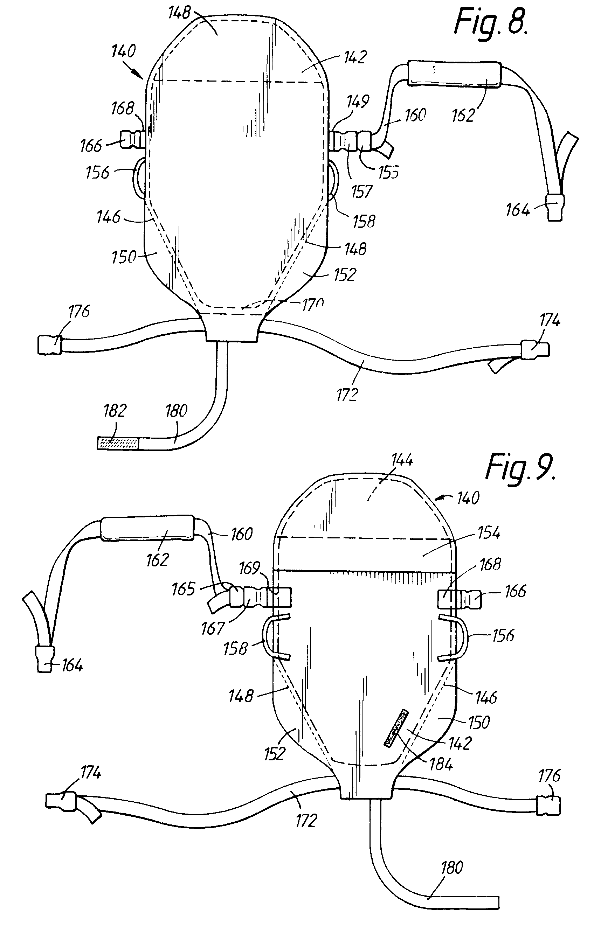

A mattress for use in the pram body 130 may be shaped so as also to serve as a baby carrier 140, as shown in Figures 8 and 9. A baby carrier of this type is disclosed in European Patent Application No. 92302505.0 (EP-A-                ). The baby carrier 140 comprises two layers of woven textile material with a mat 144 (Figure 9) between them. The two layers of the cover 142 are stitched together around their periphery and by lines of stitching 146 and 148 which delineate two side zones 150 and 152 into which the mat 142 does not extend. An overlapped portion 154 of the rear layer of the cover 141 provided an opening through which the mat may be withdrawn to permit the cover 142 to be washed. A respective webbing loop 156, 158 is sewn onto each outer edge of the cover 142.

A shoulder strap 160, carrying a shoulder pad 162, has each end threaded through a respective belt adjuster which forms part of the tongue 164, 165 of a buckle, the receptor 166, 167 of which is attached by a short length of webbing 168, 169 to the rear surface of the cover 142.

The carrier 140 tapers downwardly and has its bottom edge doubled over to provide a channel 170 in which a waist belt 172 is freely slidable. One end of the waist belt 172 is threaded through a belt adjuster in a tongue 174 of a second buckle, the receptor 176 of which is attached to the other end of the waist belt 172.

A further webbing strap 180 has one end attached to the back of the carrier 140 near its bottom edge. A length 182 of the top part of the a touch-and-close fastener is attached to the free end of the additional strap 180 and a corresponding length 184 (Figure 9) of the loop element of the touch-and-close fastener is sewn onto the back surface of the lower region of the cover 142.

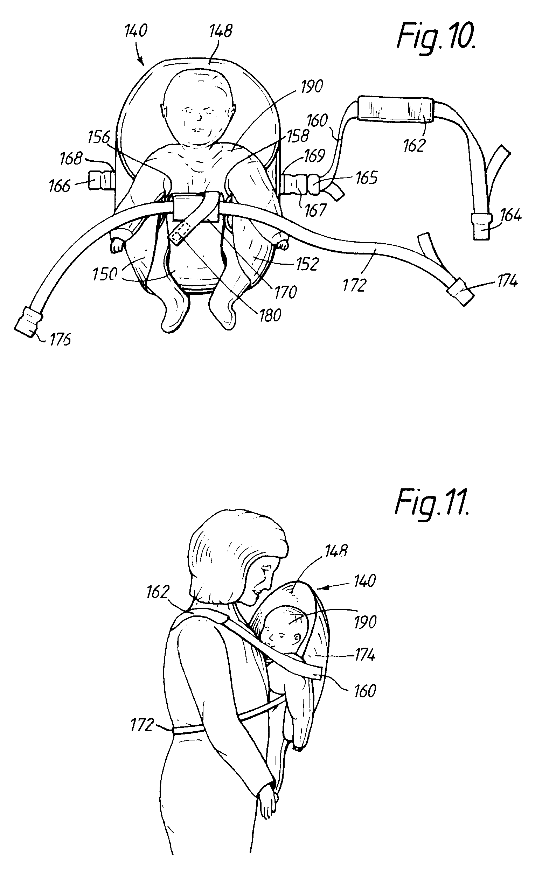

Referring to Figure 10, when the baby carrier 140 is to be used, a baby 190 is laid with its head and back on the upper central part of the carrier 140. If the baby is in the pram body 130 (Figure 5), it will already be in this position. The bottom edge of the carrier 140 is folded up between the baby's legs and the two side zones 150 and 152 (into which the mat 144 does not extend) are folded round the baby's legs with the loops 156 and 158 either passing under the baby's arms (as illustrated) or over the baby's arms in the case of a very young baby. The third strap 180 is then threaded first through the loop 156 and then through the loop 158 and finally over the exposed back surface of the cover 142 so that the hooks on the fastener element 182 engage with the loops on the fastener element 184 to hold the end of the strap 180 as illustrated.

The adult who is to carry the baby 190 then positions the baby on the one hip (her left hip as illustrated in Figure 11), passes the shoulder strap 160 over the opposite shoulder and inserts the tongue 164 into the receptor 166.

Next, the user passes the strap 172 round her waist and inserts the tongue 174 into the receptor 176 and finally pulls on the free end of the strap 172 so as to tighten the waist strap 172 appropriately. The baby 190 is then securely supported and the adult has both hands free.

If the adult user wishes to support the shoulder strap 160 on her left shoulder with the baby on her right hand side, she would initially have the tongue 164 engaged in its receptor 166 and the tongue 165 disengaged from its receptor 167. Alternatively, she may insert both tongues 164 and 165 into their respective receptors 166 and 167 before picking the baby up, and then pass the shoulder strap 160 over her head and position it on whichever shoulder she prefers.

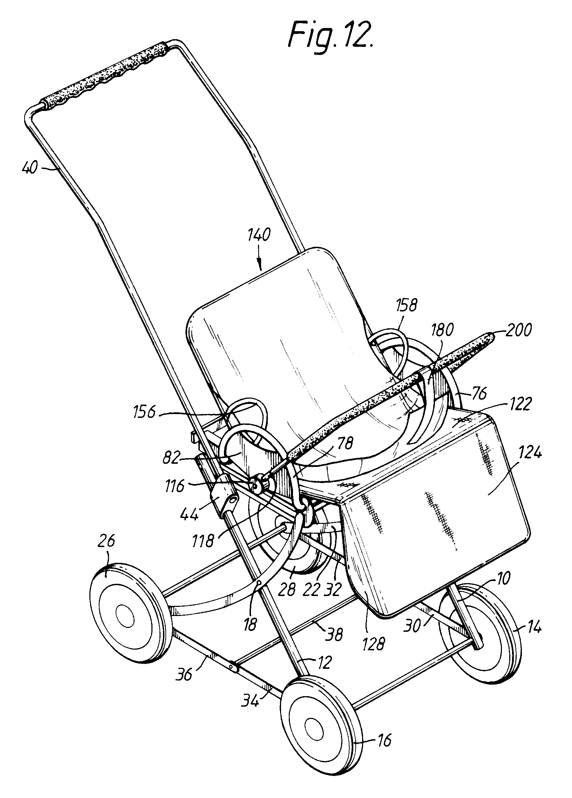

Referring to Figure 12, the body frame shown in Figure 4 may also serve as the structure of a pushchair body. When the child is to face forwardly, as illustrated, the body frame is positioned on the chassis with the U-shaped member 96 closest to the handle 40. The body frame can be positioned the other way round (i.e. as in Figure 5) if the child is to face rearwardly.

A bumper bar 200 is mounted on the spigots 118. The baby carrier 130 is positioned on the body frame so that the overlapped portion 154 engages over the free end of the U-shaped member 96. The webbing strap 180 is looped round the bumper bar 200 and secured by the touch-and-close fastener 182, 184.

When the pushchair is in the orientation illustrated in Figure 12, the studs on the U-shaped member 96 engage in the notches 90 on the index plates 86 and the studs on the bars 108 and 100 engage in the notches 93. The pushchair may be set in a recline position with the studs on the frame 96 in the notches 89 and the studs on the bars 108 and 110 in the notches 92. Alternatively, the pushchair may be set in a fully upright position with the studs on the U-shaped member 96 in the notches 91 and the studs on the bars 108 and 110 in the notches 94.

## Claims

1. A child transporter comprising a chassis (10-70), a body frame (72-118) detachable from the chassis (10-70) and a fabric cover (120-128) detachable from the body frame (72-118), characterised in that the body frame (72-118) comprises a plurality of pivotally interconnected frame members (72-78; 96; 108-112) and means (86) for securing the frame members (72-78; 96; 108-112) in a plurality of alternative orientations relative to each other.

2. A child transporter according to claim 1 or 2, wherein the frame members of the body frame (72-118) comprises a static sub-frame (72-78), and first and second pivoting sub-frames (96; 108-112) pivotally attached to the static sub-frame (72-78) for separate angular movement about a common pivot axis (84).

3. A child transporter according to claim 2, wherein the first pivoting sub-frame (96) is pivotable into abutment with the second pivoting sub-frame (108-112).

4. A child transporter according to claim 2 or 3, wherein the static sub-frame (72-80) includes a part-circular index plate (86) coaxial with the common pivot axis (84), and the first and second pivoting sub-frames (96; 108-112) have slots (98, 114) allowing limited radial movement relative to said common pivot axis (84), and the means for securing the first and second pivoting sub-frames in a plurality of alternative relative orientations comprises detent formations thereon arranged to engage in complementary formations (88-94) on the periphery of the index plate (86).

5. A child transporter according to claim 4, further comprising an auxiliary sub-frame (102) pivotally attached to the second pivoting sub-frame (108-112) for angular movement about an axis (106) parallel to and spaced from said common pivot axis (84).

6. A child transporter according to claim 5, wherein the body frame has a fabric cover with a first panel (120) conforming to the first pivoting sub-frame (96), a second panel (122) conforming to the second pivoting sub-frame (108-112) and a third panel (124) conforming to the auxiliary sub-frame (102).

7. A child transporter according to claim 6, further comprising a fabric pram body (130) including at least one integral frame member (132, 134, 136) for engagement with the static sub-frame (72-80), the fabric cover (120-124) of the body frame serving as the base of the pram body.

8. A child transporter according to claim 6, including a baby carrier (140) comprising a piece of flexible sheet material having an upper part shaped to extend behind a baby's back and a lower part shaped to pass between the baby's legs so that a free end thereof is positioned in front of the baby's abdomen, the upper part of the baby carrier having means (154) for attaching it to the first pivoting subframe (96).

9. A child transporter according to claim 8, wherein the baby carrier (140) has (detachable means for connecting the sides of the upper part to the free end of the lower part comprises) a respective loop (156, 158) attached to each side of the upper part and a strap (180) having one end fixed to the lower part and its other end carrying releasable connection means (182) whereby it may be releasably attached to the lower part.

10. A child transporter according to claim 9, wherein the releasable connection means comprises a touch-and-close fastener (182).

11. A child transporter according to claim 8 or 9, wherein the baby carrier (140) includes a shoulder strap (160) for extending over an adult's shoulder and having its ends secured to the upper part, and a waist strap (172) for extending round an adult's waist and attached to the lower part adjacent to the free end (170) thereof, the baby carrier being removable with a baby secured therein.

12. A child transporter according to claim 7 and any of claims 8 to 11, wherein the baby carrier (140) is dimensioned to fit within the pram body (130) to serve as a mattress.

13. A child transporter according to any preceding claim, wherein the body frame (72-118) is detachable from the chassis (10-70) with a child occupant in position.

Fig. 1.

Fig.2.

Fig.3.

Fig.4.

Fig.5.

Fig.6.

Fig. 7.

*Fig. 8.*

*Fig. 9.*

11

Fig. 10.

Fig. 11.

Fig.12.